# EUROPÄISCHE PATENTSCHRIFT

(11) **EP 3 990 320 B1**
(45) Veröffentlichungstag und Bekanntmachung des Hinweises auf die Patenterteilung: **09.08.2023**
(21) Anmeldenummer: 20733736.1
(22) Anmeldetag: 17.06.2020
(51) Int. Cl.: B60T 1/087, F16D 57/04

(54) **RETARDER**
RETARDER
RETARDATEUR

(30) Priorität: 26.06.2019 DE 102019117147
(43) Veröffentlichungstag der Anmeldung: 04.05.2022
(73) Patentinhaber: Voith Patent GmbH, 89522 Heidenheim (DE)
(72) Erfinder: LAUKEMANN, Dieter, 74586 Frankenhardt (DE); JÄGER, Martin, 74597 Stimpfach - Randenweiler (DE); VOGELGSANG, Thomas, 74564 Crailsheim (DE)
(74) Vertreter: Voith Patent GmbH - Patentabteilung
(86) Internationale Anmeldenummer: PCT/EP2020/066654
(87) Internationale Veröffentlichungsnummer: WO 2020/260076

(56) Entgegenhaltungen:
- DE-A1-102013 224 095

## Beschreibung

Die Erfindung betrifft einen hydrodynamischen Retarder, für ein Fahrzeug gemäß dem Oberbegriff von Patentanspruch 1.

Ein Retarder dieser Art ist aus DE 102013224095 A1 bekannt.

Derartige hydrodynamische Retarder für Fahrzeuge, insbesondere Nutzfahrzeuge, sind aus dem allgemeinen Stand der Technik bereits hinlänglich bekannt. Dabei können unterschiedliche Arbeitsmedien, wie Öl oder Wasser, Verwendung finden. Öl ist beispielsweise das Arbeitsmedium eines Sekundär-Öl-Retarders. Während ein Sekundärwasser-Retarder (SWR) Kühlwasser aus dem Kühlsystem des Fahrzeugs als Arbeitsmedium nutzt.

Das Gehäuse eines Sekundär-Öl-Retarders umschließt einen Retarderölraum in dem unter anderem der Stator und der über die Antriebswelle drehbar gelagerte Rotor angeordnet sind. Der Retarder ist weiterhin zum Anbau an ein Getriebe mit einem Getriebeölraum vorgesehen. Der Antrieb erfolgt über ein Hochtriebszahnrad auf der Antriebswelle, das von einem getriebeseitigen Zahnrad angetrieben wird.

Die Anforderungen an das Öl für einen Ölretarder, z. B. dessen Temperaturbeständigkeit und Viskosität, sind relativ hoch, so dass als Arbeitsmedium im allgemeinen kein Getriebeöl zum Einsatz kommen kann. Der Getriebeölraum muss somit vom Retarderölraum fluiddicht getrennt werden. Dafür ist ein Radialwellendichtring vorgesehen, durch den die Antriebswelle hindurchragt und durch den die Welle in zwei Abschnitte unterteilt wird. Mit anderen Worten die Retarderwelle ragt zum einen in den Retarderölraum und zum anderen in den Getriebeölraum, die fluiddicht voneinander getrennt sind.

Zur Sicherstellung der beidseitigen Schmierung des Radialwellendichtrings gibt es unterschiedliche Konzepte, wobei die Praxis gezeigt hat, dass es bei den bekannten Konzepten zu oft zu Defekten an den Radialwellendichtringen kommt.

Die Aufgabe der Erfindung ist es die Betriebssicherheit eines Retarders zu verbessern.

Die Aufgabe wird erfindungsgemäß durch eine Ausführung entsprechend Anspruch 1 gelöst. Weitere vorteilhafte Merkmale der erfindungsgemäßen Ausführung finden sich in den Unteransprüchen.

Erfindungsgemäß wird ein Retarder zum Anbau an ein Getriebe vorgeschlagen, der eine Gehäuseeinrichtung, umschließend einen Retarderölraum, und eine Welle mit einem ersten Abschnitt auf dem ein Rotor und einem zweiten Abschnitt auf dem ein Hochtriebszahnrad drehfest angeordnet sind, umfasst. Der erste Abschnitt ist im Retarderölraum positioniert und der zweite Abschnitt ragt in den Getriebeölraum hinein, wobei zwischen Retarderölraum und Getriebeölraum ein Dichtelement angeordnet ist, so dass diese fluidisch voneinander getrennt sind.

Zur Verbesserung der Betriebssicherheit wird vorgeschlagen, dass in der Welle ein Kanal vorgesehen ist, mittels dem Öl aus dem Getriebeölraum zum Dichtelement leitbar ist.

Weiterhin kann vorgesehen sein, dass auf der Welle im Bereich des zweiten Abschnitts ein Lager angeordnet ist, wobei das Lager zwischen dem Dichtelement und dem Hochtriebszahnrad auf der Welle angeordnet ist. Vorzugsweise wird die Welle mittels dem Lager gegenüber der Gehäuseeinrichtung gelagert. Durch diese Anordnung erfolgt die Lagerung der Welle komplett über das Gehäuse des Retarders und eine separate Lagerung im Getriebegehäuse kann entfallen.

Weiterhin kann der Kanal in der Welle zumindest einen Querkanal aufweisen, wobei der Querkanal zwischen Lager und Dichtelement angeordnet ist. Vorzugsweise kann vorgesehen sein, dass der Querkanal zwischen dem Lager und dem Dichtelement in einem Kanalausgangsraum endet, von dem Teilölströme zum Lager und Dichtelement leitbar sind. Dabei kann in dem Kanalausgangsraum ein Leitelement angeordnet sein, durch das die Aufteilung des Ölstroms auf Lager und Dichtelement entsprechend den Erfordernissen angepasst werden kann.

Des Weiteren kann vorgesehen sein, dass der Kanal neben dem Querkanal einen ersten Kanalabschnitt und einen zweiten Kanalabschnitt umfasst, wobei der erste Kanalabschnitt und der Querkanal einen kleineren Querschnitt aufweisen als der zweite Kanalabschnitt. Der zweite Kanalabschnitt kann somit ein größeres Ölvolumen aufnehmen, so dass eine gewisse Speicherung erfolgt.

Das Dichtelement kann vorzugsweise ein Radialwellendichtring sein.

Anhand von Ausführungsbeispielen wird die Erfindung unter Bezugnahme auf die Zeichnungen weiter erläutert. Die Figuren zeigen im Einzelnen:
- Fig.1: Anschlussbereich des Retarders
- Fig.2: Vergrößerte Darstellung des Schmierbereichs

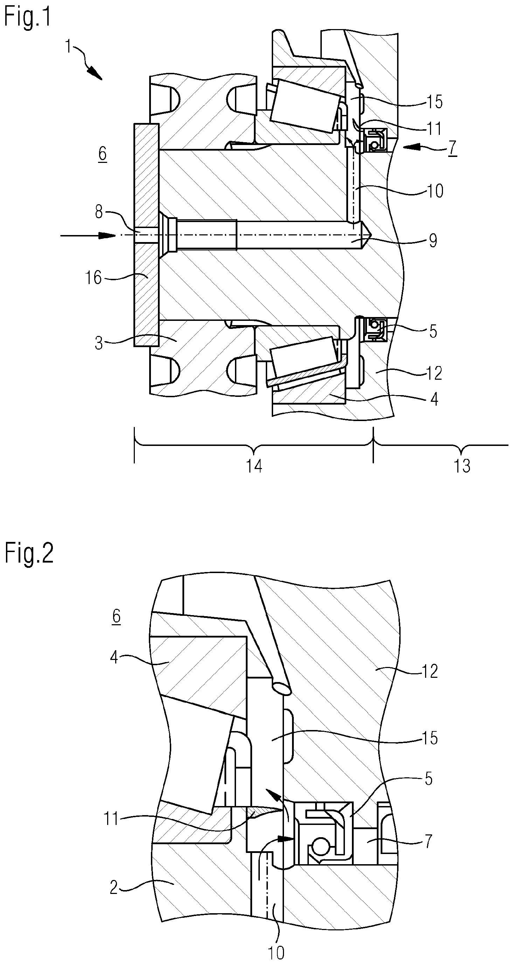

In Figur 1 ist der Anschlussbereich des Retarders 1 dargestellt. Zu erkennen ist die Gehäuseeinrichtung 12, wobei hier nur ein Ausschnitt des Gehäusedeckels zu sehen ist, in dem das Lager 4 und der Radialwellendichtring 5 angeordnet sind. Die Welle 2 ist über das Lager 4 gegenüber der Gehäuseeinrichtung 12, bzw. des Gehäusedeckels gelagert, wobei die Lageraufnahme im Gehäusedeckel derart gestaltet ist, dass ein Kanalausgangsraum 15 gebildet wird. In diesen Kanalausgangsraum 15 endet der Kanal 8, 9, 10 der durch die Welle 2 führt und durch den Öl aus dem Getriebeölraum 6 an die Schmierstellen geleitet wird.

Der Getriebeölraum 6 ist ein Raum der von einem hier nicht dargestellten Getriebegehäuse gebildet wird. In diesem Raum sind die Bauteile des Getriebes angeordnet und es ist eine Ölschmierung vorgesehen, mittels der alle Elemente des Getriebes geschmiert werden können. Unter anderem ist im Getriebeölraum 6 auch ein Zahnrad angeordnet, dass mit dem hier dargestellten Hochtriebszahnrad 3 in Eingriff bringbar ist, so dass die Welle 2 angetrieben wird.

In diesem Getriebeölraum 6 wird der Retarder 1 eingesteckt, so dass der zweite Abschnitt 14, der Zahnradabschnitt der Welle 2, mit den darauf angeordneten Hochtriebszahnrad 3 und Lager 4, an den Ölkreislauf des Getriebes angeschlossen ist und mit Getriebeöl geschmiert wird. Der Anschluss an den Getriebeölkreislauf ist dabei derart gestaltet, dass Getriebeöl über den ersten Kanalabschnitt 4, der in dieser Ausführung durch den Deckel 16 a verläuft, den zweiten Kanalabschnitt 9, der durch die Welle 2 verläuft, und die Querbohrung 10 in den Kanalausgangsraum 15 gefördert wird. In diesem Kanalausgangsraum 15 ist eine Leitvorrichtung 11 angeordnet, über die das Öl gezielt zum Radialwellendichtring 5 und zum Lager 4 geleitet wird, so dass die Schmierung sichergestellt ist.

Der erste Abschnitt 13, der Rotorabschnitt, der Welle 2 beginnt hinter dem Radialwellendichtring 5 und ragt in den Retarderölraum 7, der in dieser Figur ebenfalls nur angedeutet ist.

Die Schmierung des Radialwellendichtrings 5 erfolgt durch diesen Aufbau also Retarderölraumseitig 6 mit dem Arbeitsmedium des Retarders 1 und Getriebeölraumseitig 7 mit Getriebeöl.

In Figur 2 ist eine vergrößerte Darstellung des Schmierbereichs dargestellt. Weiterhin ist die Leitvorrichtung 11 hier beispielhaft anders angeordnet, so dass eine vorrangige Schmierung des Radialwellendichtrings erfolgt und anschließend das Öl erst zum Lager gelangt.

### Bezugszeichenliste

- 1: Retarder
- 2: Welle
- 3: Hochtriebszahnrad
- 4: Lager
- 5: Wellendichtring
- 6: Getriebeölraum
- 7: Retarderölraum
- 8: erster Kanalabschnitt
- 9: zweiter Kanalabschnitt
- 10: Querkanal
- 11: Leitvorrichtung
- 12: Gehäuseeinrichtung
- 13: erster Abschnitt, Rotorabschnitt
- 14: zweiter Abschnitt, Zahnradabschnitt
- 15: Kanalausgangsraum
- 16: Deckel

## Patentansprüche

1. Hydrodynamische Maschine, insbesondere hydrodynamischer Retarder (1), zum Anbau an ein Getriebe mit einem Getriebeölraum (6), umfassend eine Gehäuseeinrichtung (12), umschließend einen Retarderölraum (7), und eine Welle (2) mit einem ersten Abschnitt (13) auf dem ein Rotor und einem zweiten Abschnitt (14) auf dem ein Hochtriebszahnrad (3) drehfest angeordnet sind, wobei der erste Abschnitt (13) in den Retarderölraum (6) und der zweite Abschnitt (14) in den Getriebeölraum (6) hineinragt, wobei zwischen Retarderölraum (7) und Getriebeölraum (6) ein Dichtelement (5) angeordnet ist, so dass diese fluidisch voneinander getrennt sind,
**dadurch gekennzeichnet, dass**
in der Welle (2) ein Kanal (8, 9, 10) vorgesehen ist mittels dem Öl aus dem Getriebeölraum (6) zum Dichtelement (5) leitbar ist.

2. Hydrodynamische Maschine nach Anspruch 1,
**dadurch gekennzeichnet, dass**
auf der Welle (2) im Bereich des zweiten Abschnitts (14) ein Lager (4) angeordnet ist.

3. Hydrodynamische Maschine nach Anspruch 2,
**dadurch gekennzeichnet, dass**
die Welle (2) mittels dem Lager (4) gegenüber der Gehäuseeinrichtung (12) gelagert ist, wobei das Lager (4) zwischen dem Dichtelement (5) und dem Hochtriebszahnrad (3) auf der Welle (2) angeordnet ist.

4. Hydrodynamische Maschine nach Anspruch 2,
**dadurch gekennzeichnet, dass**
der Kanal (8, 9, 10) zumindest einen Querkanal (10) aufweist, wobei der Querkanal (10) zwischen Lager (4) und Dichtelement (5) angeordnet ist.

5. Hydrodynamische Maschine nach Anspruch 4,
**dadurch gekennzeichnet, dass**
der Querkanal (10) zwischen dem Lager (4) und dem Dichtelement (5) in einem Kanalausgangsraum (15) endet, von dem Teilölströme zum Lager (4) und Dichtelement (5) leitbar sind.

6. Hydrodynamische Maschine nach Anspruch 5,
**dadurch gekennzeichnet, dass**
in dem Kanalausgangsraum (15) ein Leitelement (11) angeordnet ist.

7. Hydrodynamische Maschine nach Anspruch 4,
**dadurch gekennzeichnet, dass**
der Kanal (8, 9, 10) neben dem Querkanal (10) einen erster Kanalabschnitt (8) und einen zweiten Kanalabschnitt (9) umfasst, wobei der erste Kanalabschnitt (8) und der Querkanal (10) einen kleineren Querschnitt aufweisen als der zweite Kanalabschnitt (9).

8. Hydrodynamische Maschine nach Anspruch 1,
**dadurch gekennzeichnet, dass**
das Dichtelement (5) ein Radialwellendichtring ist.

## Claims

1. Hydrodynamic machine, in particular hydrodynamic retarder (1), for installation on a gearbox with a gearbox oil chamber (6), comprising a housing device (12), surrounding an retarder oil chamber (7), and a shaft (2) with a first portion (13) on which a rotor is arranged for conjoint rotation and a second portion (14) on which a step-up drive gearwheel (3) is arranged for conjoint rotation, wherein the first portion (13) projects into the retarder oil chamber (6) and the second portion (14) projects into the gearbox oil chamber (6), wherein a sealing element (5) is arranged between the retarder oil chamber (7) and gearbox oil chamber (6) such that they are fluidically separated from one another,
**characterized in that**
a duct (8, 9, 10) by means of which oil can be conducted from the gearbox oil chamber (6) to the sealing element (5) is provided in the shaft (2).

2. Hydrodynamic machine according to Claim 1,
**characterized in that**
a bearing (4) is arranged on the shaft (2) in the region of the second portion (14).

3. Hydrodynamic machine according to Claim 2,
**characterized in that**
the shaft (2) is mounted in relation to the housing device (12) by means of the bearing (4), the bearing (4) being arranged on the shaft (2) between the sealing element (5) and the step-up drive gearwheel (3) .

4. Hydrodynamic machine according to Claim 2,
**characterized in that**
the duct (8, 9, 10) has at least one transverse duct (10), the transverse duct (10) being arranged between the bearing (4) and sealing element (5).

5. Hydrodynamic machine according to Claim 4,
**characterized in that**
the transverse duct (10) between the bearing (4) and the sealing element (5) ends in a duct output chamber (15) from which partial oil flows can be conducted to the bearing (4) and sealing element (5).

6. Hydrodynamic machine according to Claim 5,
**characterized in that**
a guide element (11) is arranged in the duct output chamber (15).

7. Hydrodynamic machine according to Claim 4,
**characterized in that**
the duct (8, 9, 10) comprises, in addition to the transverse duct (10), a first duct portion (8) and a second duct portion (9), the first duct portion (8) and the transverse duct (10) having a smaller cross section than the second duct portion (9).

8. Hydrodynamic machine according to Claim 1,
**characterized in that**
the sealing element (5) is a radial shaft sealing ring.

## Revendications

1. Machine hydrodynamique, notamment ralentisseur hydrodynamique (1), destinée à être montée sur une transmission avec une chambre d'huile de transmission (6), comprenant un dispositif de carter (12), entourant une chambre d'huile de ralentisseur (7), et un arbre (2) avec une première section (13) sur laquelle un rotor et une deuxième section (14) sur laquelle une roue dentée multiplicatrice (3) sont agencés de manière solidaire en rotation, la première section (13) pénétrant dans la chambre d'huile de ralentisseur (6) et la deuxième section (14) dans la chambre d'huile de transmission (6), un élément d'étanchéité (5) étant agencé entre la chambre d'huile de ralentisseur (7) et la chambre d'huile de transmission (6), de telle sorte que celles-ci sont séparées fluidiquement l'une de l'autre,
**caractérisée en ce que**
un canal (8, 9, 10) est prévu dans l'arbre (2) au moyen duquel de l'huile peut être conduite de la chambre d'huile de transmission (6) à l'élément d'étanchéité (5) .

2. Machine hydrodynamique selon la revendication 1,
**caractérisée en ce que**
un palier (4) est agencé sur l'arbre (2) dans la zone de la deuxième section (14).

3. Machine hydrodynamique selon la revendication 2,
**caractérisée en ce que**
l'arbre (2) est monté au moyen du palier (4) par rapport au dispositif de carter (12), le palier (4) étant agencé sur l'arbre (2) entre l'élément d'étanchéité (5) et la roue dentée multiplicatrice (3).

4. Machine hydrodynamique selon la revendication 2,
**caractérisée en ce que**
le canal (8, 9, 10) présente au moins un canal transversal (10), le canal transversal (10) étant agencé entre le palier (4) et l'élément d'étanchéité (5).

5. Machine hydrodynamique selon la revendication 4,
**caractérisée en ce que**
le canal transversal (10) se termine entre le palier (4) et l'élément d'étanchéité (5) dans un espace de sortie de canal (15), à partir duquel des courants d'huile partiels peuvent être conduits vers le palier (4) et l'élément d'étanchéité (5).

6. Machine hydrodynamique selon la revendication 5,
**caractérisée en ce que**
un élément de guidage (11) est agencé dans l'espace de sortie du canal (15).

7. Machine hydrodynamique selon la revendication 4,
**caractérisée en ce que**
le canal (8, 9, 10) comprend, outre le canal transversal (10), une première section de canal (8) et une deuxième section de canal (9), la première section de canal (8) et le canal transversal (10) présentant une section transversale plus petite que la deuxième section de canal (9) .

8. Machine hydrodynamique selon la revendication 1,
**caractérisée en ce que**
l'élément d'étanchéité (5) est un joint à lèvre radiale.
